Europäisches Patentamt

European Patent Office

Office européen des brevets

(11) Veröffentlichungsnummer: 0 345 743
A1

## (12) EUROPÄISCHE PATENTANMELDUNG

(21) Anmeldenummer: 89110257.6

(22) Anmeldetag: 07.06.89

(51) Int. Cl.⁴: A01G 13/02

(30) Priorität: 09.06.88 DE 3819610

(43) Veröffentlichungstag der Anmeldung:
13.12.89 Patentblatt 89/50

(84) Benannte Vertragsstaaten:
AT BE CH FR GB IT LI LU NL SE

(71) Anmelder: Kupke, Jürgen
Sebastianusstrasse 29
D-5350 Euskirchen(DE)

(72) Erfinder: Kupke, Jürgen
Sebastianusstrasse 29
D-5350 Euskirchen(DE)

(74) Vertreter: Fechner, Joachim, Dr.-Ing.
Im Broeltal 78
D-5202 Hennef 1(DE)

(54) Mulchplatte für Reihenpflanzungen.

(57) Die Mulchplatte (1) hat eine längliche Form und an ihrem Schmalseiten (5,6) oder Längsseiten (7) sind mehrere Einschnitte (2) oder wenigstnes ein Ausschnitt (9) ausgebildet. Vorzugsweise besteht die Platte aus zwei teilweise übereinanderliegenden Plattenteilen (1ᵃ,1ᵇ) gleicher Breite und ist an den Längsseiten (7) jedes Plattenteils ein Führungsansatz (13 bzw. 15) für den darüber bzw. darunter liegenden Plattenteil angeordnet. Die Platten dienen zur Unterdrückung des Unkrautwachstums in Weingärten, Baumschulen und dergl. und decken den gesamten Bodenstreifen in bestimmter Breite unterhalb der Reben- bzw. Baumreihe ab.

EP 0 345 743 A1

FIG. 8

## Mulchplatte für Reihenpflanzungen

Die Erfindung betrifft eine Mulchplatte zur Unterdrückung des Unkrautwachstums in der Umgebung von Weinreben oder jungen Bäumen in Weingärten, Obstplantagen und Baumschulen, die aus einem biegsamen, lichtundurchlässigen Material besteht. Die Erfindung betrifft auch ein Verfahren zum Verlegen eines Bandes aus diesen Mulchplatten unter einer Reben- oder Baumreihe.

Es sind Mulchplatten zur Verhinderung des Unkrautwachstums in der unmittelbaren Umgebung junger Nutzpflanzen, wie z.B. junger Sträucher oder Forstpflanzen bekannt, die z.B. aus einem runden oder vieleckigen Zuschnitt aus Pappe mit einer zentralen Öffnung und einem radialen, von der Öffnung zum Plattenrand verlaufenden Schlitz bestehen. Diese Mulchplatte wird um die Pflanze herumgelegt und deckt nur eine begrenzte Fläche in der unmittelbaren Umgebung der Pflanze ab. Es ist nicht Aufgabe dieser Mulchplatte, das Unkrautwachstum insgesamt zwischen den Nutzpflanzen zu verhindern, und hierzu sind diese Platten auch nicht geeignet. Andererseits besteht in Weingärten, Baumschulen, Obstplantagen ein erhebliches Bedürfnis, die Bodenstreifen unterhalb der Reben- bzw. Baumreihen unkrautfrei zu halten. Speziell in Weingärten hat sich gezeigt, daß sich zwischen den Reben Kletterpflanzen entwickeln, die in die Reben hineinwachsen und nur schwierig zu entfernen sind.

Der Erfindung liegt die Aufgabe zugrunde, eine Mulchplatte zur Unterdrückung des Unkrautwachstums in der Umgebung von Weinreben oder jungen Bäumen in Weingärten, Baumschulen, Obstplantagen usw. zu schaffen, die den gesamten Bodenstreifen in bestimmter Breite unterhalb der Reben- bzw. Baumreihe abdeckt und dadurch das Unkrautwachstum in der Reihe verhindert. Insbesondere soll eine Mulchplatte geschaffen werden, die sich leicht verlegen und festlegen läßt. Schließlich soll der Bodenstreifen möglichst vollständig abgedeckt werden und der Abstand der Nutzpflanzen in der Reihe sowie auch die Stammdicke der Nutzpflanze differieren können. Schließlich soll auch ein wirtschaftliches Verlegeverfahren für diese Platten beschaffen werden.

Diese Aufgabe wird durch eine Mulchplatte für Reihenpflanzungen aus einem biegsamen, lichtundurchlässigen Material gelöst, die erfindungsgemäß eine längliche Form hat und bei der an den Längsseiten oder den Schmalseiten mehrere Einschnitte oder wenigstens ein Ausschnitt ausgebildet ist. Die längliche Platte ist im wesentlichen rechteckig ausgebildet. Dabei entspricht die Breite der Platte der Breite des abzudeckenden Bodenstreifens, und die Länge der Platte ist im allgemeinen etwas größer als der Abstand zweier benachbarter Pflanzen in der Reihe.

Nach der bevorzugten Ausführungsform der Erfindung besteht die Mulchplatte aus wenigstens zwei teilweise übereinanderliegenden Plattenteilen gleicher Breite und ist an den Längsseiten jedes Plattenteils ein Führungsansatz für den darüber bzw. darunter liegenden Plattenteil angeordnet. Diese vorzugsweise zweiteilige Platte läßt sich mühelos an unterschiedliche Abstände der Reben bzw. Bäume in der Reihe anpassen, indem man die übereinanderliegenden Plattenteile weiter zusammenschiebt oder auseinanderzieht. Die Führungsansätze gewährleisten die Führung der beiden übereinanderliegenden Plattenteilen beim Zusammenschieben oder Auseinanderziehen.

Bei dieser Mulchplatte sind vorzugsweise die Führungsansätze eines Plattenteils mit den darüber bzw. darunter liegenden anderen Plattenteil übergreifenden Schenkeln versehen. Die so ausgebildeten Führungsansätze gewährleisten nicht nur die Führung der Plattenteile bei ihrer gegenseitigen Verschiebung, sondern auch den Zusammenhalt der beiden Plattenteile senkrecht zur Plattenebene.

Bei dieser Ausführungsform können die Ausschnitte an den Schmalseiten der Mulchplatte V- oder U-förmig ausgebildet sein. Der Stamm der Rebe bzw. des Baums befindet sich nach der Verlegung der Platten innerhalb dieser Ausschnitte. Desgleichen kann ein Pfahl innerhalb dieser Ausschnitte angeordnet sein.

Bei einer anderen Ausgestaltung der zweiteiligen Mulchplatte erstrecken sich die Ausschnitte an den Längsseiten bis über die halbe Breite der Plattenteile. Der Ausschnitt der einen Platte wird von einer Seite um den Stamm geschoben, während der Ausschnitt der nächsten Platte von der anderen (gegenüberliegenden) Seite um diesen Stamm geschoben wird, so daß wiederum eine vollständige Abdeckung des Bodens in der Umgebung des Stamms erreicht wird. Die Ausschnitte bei dieser Ausführungsform können etwa L-förmig ausgebildet sein. In diesem Falle werden die Platten nach der Verlegung noch in Längsrichtung (des Plattenbandes) gegeneinander verschoben, um eine möglichst vollständige Abdeckung zu erreichen.

Die erfindungsgemäße Mulchplatte besteht vorzugsweise aus Kunststoff, da sie den Gehölzen einen möglichst dauerhaften Schutz vor Unkrautwachstum bieten soll. Selbstverständlich ist es auch möglich, die Platte aus einem verrottbaren Material, insbesondere Pappe herzustellen.

Bei der Ausführungsform der Platte mit Einschnitten hat im allgemeinen nur die eine Schmalseite der Platte Einschnitte, während die andere Schmalseite eine Aussparung aufweist. Durch die Einschnitte an der einen Schmalseite entstehen aufbiegbare Laschen, die eine Verlegung der Platte zwischen benachbarten Reben bzw. Bäumen gestatten, wobei die mittleren Laschen bei der Verlegung durch den Stamm der Pflanze hochgebogen werden, während die beiden Randlaschen an den Längsseiten in der Plattenebene verbleiben und dem Erdboden aufliegen. Auf diese Weise umgbit die Platte den Stamm relativ eng, so daß zwischen Platte und Stamm kein Unkraut wachsen kann. Die hochgebogenen Laschen bewirken eine gewissen Festlegung der Platte durch Klemmung am Stamm bzw. sie können dazu dienen, die Platte z.B. mittels eines elastischen Bandes an dem Stamm zu befestigen.

Nach der bevorzugten Ausführungsform der erfindungsgemäßen Mulchplatte ist diese im wesentlichen rechteckig ausgebildet. Die Einschnitte befinden sich vorzugsweise an einer Schmalseite des Rechtecks. Vorzugsweise sind die Einschnitte zueinander und zu den Längsrändern der Platte parallel. Der Abstand der Einschnitte und damit die Breite der gebildeten Laschen kann unterschiedlich sein. Er liegt im allgemeinen in dem Bereich von 0,5 bis 4 cm, so daß die Platte den Stamm relativ eng umfaßt. Die Plattenlänge ist so zu wählen, daß sich benachbarte Platten überlappen, d.h. die Plattenlänge muß größer sein als der lichte Abstand zweier Stämme plus den Stammdurchmesser. Dadurch ergibt sich eine Überlappung zwischen dem ungeschlitzten Ende der einen Platte und den nicht aufgebogenen, an dem Stamm vorbeigeführten Randlaschen der folgenden Platte.

Vorzugsweise sind die Einschnitte an der einen Schmalseite ausgebildet und die gegenüberliegende andere Schmalseite der Platte hat einen vorzugsweise runden Ausschnitt. Die Platte wird mit diesem Ausschnitt an den Stamm gelegt und dadurch gegen seitliche Verschiebungen, d.h. quer zu dme abzudeckenden Streifen, festgelegt. Außerdem wird durch den runden Ausschnitt ein enger Umgriff der Platten am Stamm erreicht.

Zweckmäßigerweise ist an der mit Ausschnitt versehenen Schmalseite der Platte ein Verankerungsband angebracht. Durch dieses Band kann die Mulchplatte zusätzlich am Stamm befestigt werden.

Obwohl die durch die Einschnitte gebildeten Laschen im allgemeinen an der Platte verbleiben und jeweils nur die der Dimension des Stamms entsprechenden Laschen hochgebogen werden, können in weiterer Ausgestaltung der Erfindung die durch die Einschnitte gebildeten Laschen auch wenigstens teilweise abgetrennt werden.

Über die bereits dargelegten Möglichkeiten der Befestigung der Platte hinaus kann in der Platte wenigstens eine Durchbrechung, vorzugsweise ein Kreuzschnitt für die Plattenbefestigung an der Erde ausgebildet sein. Die Platte kann dann mit einem bzw. mehreren Erdnägeln am Boden befestigt werden.

Die Einschnitte haben zweckmäßigerweise eine Länge in dem Bereich von 5 bis 25 cm, vorzugsweise von 8 bis 15 cm. Vorzugsweise hat die erfindungsgemäße Mulchplatte eine Breite in dem Bereich von 20 bis 100 cm, eine Länge in dem Bereich von 50 bis 250 cm und eine Dicke in dem Bereich von 0,1 bis 10 mm, insbesondere von 2 bis 3 mm. Selbstverständlich kann die Platte auch andere Dimensionen haben. Bei einer 250 cm übersteigenden Länge wird man aber aus Gründen der leichteren Handhabung zwei oder mehr kürzere Platten hintereinanderlegen. Bei dieser Ausführungsform kann nur die eine Platte in der erfindungsgemäßen Weise mit Einschnitten versehen sein, während die andere Platte in der allgemeinen Form eine einfache rechteckige Verlängerungsplatte sein kann.

Zweckmäßigerweise besteht die erfindungsgemäße Mulchplatte aus Kunststoff oder Pappe. Sofern Pappe als Plattenmaterial dient, ist deren Dikke so zu wählen, daß die Platte eine Lebensdauer von wenigstens 5 Jahren hat. Die Plattendicke sollte daher wenigstens 1 mm, vorzugsweise 2 bis 5 mm betragen.

Das Verfahren zum Verlegen eines Bandes aus mehr-, insbesondere zweiteiligen Mulchplatten unter einer Reben- oder Baumreihe ist erfindungsgemäß dadurch gekennzeichnet, daß man a) die mit einem Ausschnitt versehene Schmalseite des einen Plattenteils einer ersten Platte an den ersten Stamm der Reben- bzw. Baumreihe so anlegt, daß sich der erste Stamm in dem Ausschnitt befindet, b) die mit einem Ausschnitt versehene Schmalseite des anderen Plattenteils dieser Platte ggfs. unter gegenseitiger Verschiebung der Plattenteile an den zweiten Stamm der Reben- bzw. Baumreihe so anlegt, daß sich der zweite Stamm in dem Ausschnitt befindet, und c) eine zweite, dritte,....n. Platte zwischen dem zweiten und dritten Stamm, dem dritten und vierten Stamm der Reihe usw. in gleicher Weise wie unter a) und b) angegeben verlegt. Da die Platte viele Jahre liegt, muß sie dem Dikkenwachstum des Gehölzstamms nachgeben können. Dies ist bei Verlegung der zweiteiligen Platte gegeben, da sich die bei den Plattenteile einer Platte entsprechend der Zunahme der Stammdicke übereinanderschieben.

Das Verfahren zum Verlegen eines Bandes aus Mulchplatten mit eingeschnittener Schmalseite unter einer Reben- oder Baumreihe ist erfindungsgemäß dadurch gekennzeichnet, daß man a) die den Einschnitten gegenüberliegende, nicht eingeschnittene Schmalseite einer ersten Platte am Boden an den ersten Stamm der Reben- oder Baumreihe anlegt und die mit den Einschnitten versehene andere Schmalseite der Platte mit Abstand vom Boden an den zweiten Stamm in der Reihe anlehnt, b) die mit den Einschnitten versehene Schmalseite der Platte auf den Boden absenkt und dabei eine oder mehrere der durch die Einschnitte gebildeten Laschen bei ihrer Anlage an dem zweiten Stamm hochbiegt, und c) eine zweite, dritte,...n. Platte an den zweiten, dritten,... n. Stamm anlegt und jede dieser Platten wie unter a) und b) angegeben verlegt. Auf diese Weise wird ein Bodenstreifen unter der Reben-bzw. Baumreihe mit verhältnismäßig geringem Arbeitsaufwand eng um die Stämme herum abgedeckt.

Bei beiden Ausführungsformen des Verlegeverfahrens kann man die sich überlappenden Plattenteile zweier benachbarter Platten verbinden, vorzugsweise durch Heften, z.B. mit einer Heftklammer aus rostgeschütztem Metall. Als Hefter können Geräte dienen, die im Prinzip in jedem Büro zum Zusammenheften von Papierbögen benutzt werden. Die Durchschlagskraft dieses Geräts muß selbstverständlich der Dicke und Festigkeit der zu verbindenden Platten angepaßt sein.

Die Erfindung wird nachfolgend an Hand der Zeichnung näher beschrieben. Es zeigen

Figur 1 eine erste Ausführungsform der erfindungsgemäßen Mulchplatte· in der Draufsicht, wobei an einem Plattenende auch die Nachbarplatte teilweise dargestellt ist;

Figur 2 einen Schnitt nach der Linie II-II der Figur 1 in vergrößertem Maßstab;

Figur 3 einen Schnitt nach der Linie III-III der Figur 1 in vergrößertem Maßstab;

Figur 4 einen Teil eines Plattenbandes in der Draufsicht. bei dem von Stamm zu Stamm zwei gleiche erfindungsgemäße Mulchplatten verlegt sind;

Figur 5 einen Teil eines Plattenbandes in der Draufsicht. bei dem von Stamm zu Stamm eine Mulchplatte wie in Figur 4 und eine Verlängerungsplatte verlegt sind;

Figur 6 ein Plattenband in der Draufsicht, bei dem von Stamm zu Stamm zwei gleiche Mulchplatten einer weiteren Ausführungsform der Erfindung verlegt sind;

Figur 7 eine weitere Ausführungsform der erfindungsgemäßen Mulchplatte ähnlich der in Figur 1 gezeigten Platte;

Figur 8 die Draufsicht der bevorzugten zweiteiligen Ausführungsform der erfindungsgemäßen Mulchplatte;

Figur 9 einen Schnitt nach der Linie IX-IX der Figur 8;

Figur 10 einen Schnitt nach der Linie X-X der Figur 8;

Figur 11 eine Seitenansicht der Mulchplatte nach Figur 8;

Figur 12 ein Teil eines verlegten Plattenbandes aus Platten gemäß Figur 8; und

Figur 13 die Draufsicht zweier Mulchplatten einer weiteren zweiteiligen Ausführungsform der erfindungsgemäßen Mulchplatte.

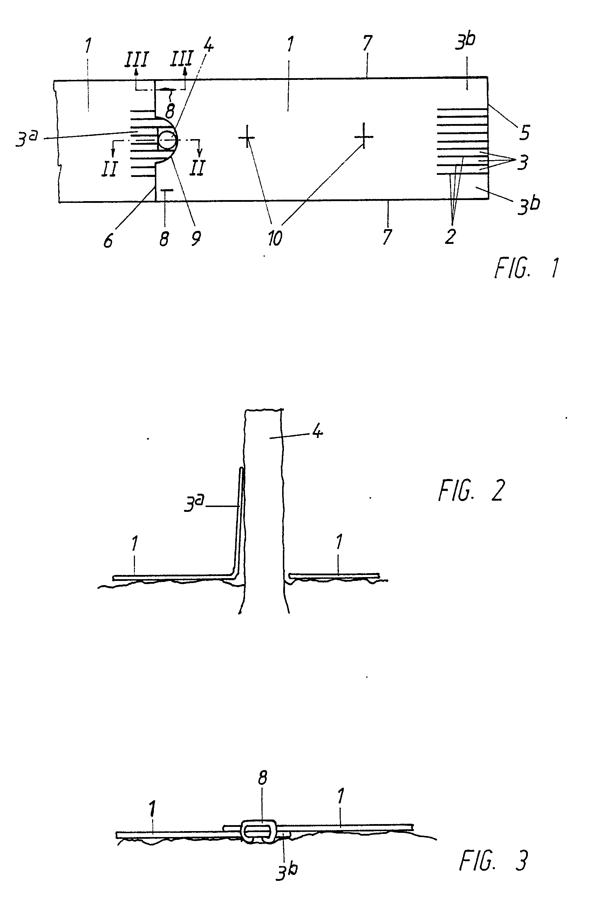

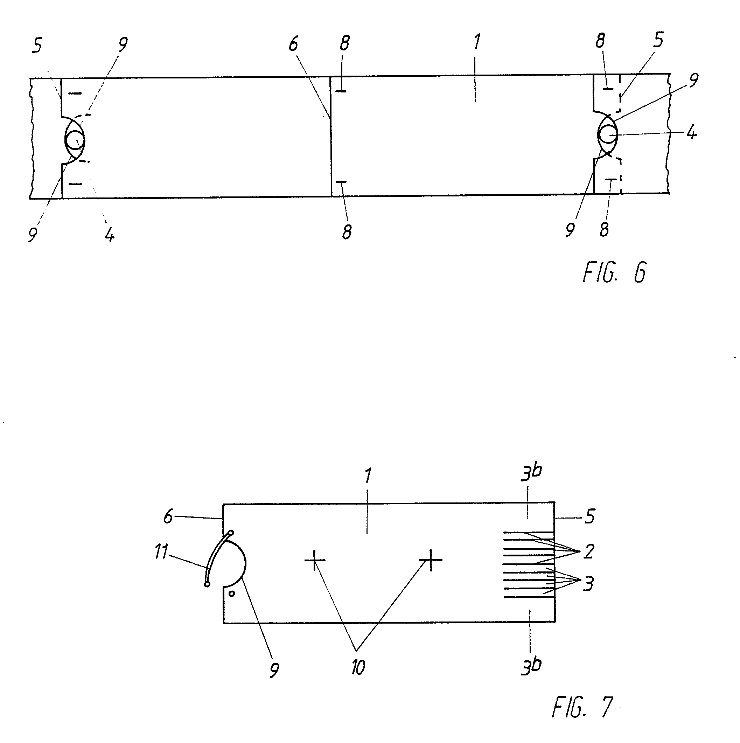

Nach den Figuren 1 bis 3 hat die dargestellte Mulchplatte 1 einen rechteckigen Zuschnitt. An ihrer einen Schmalseite 5 ist eine Reihe von zur Längsseite 7 parallelen, etwa 10 cm langen Einschnitten 2 vorgesehen, durch die eine Reihe von Laschen 3 gebildet werden. An den Längsseiten 7 verbleiben Randlaschen $3^b$, die wesentlich breiter als die Laschen 3 sind. An der gegenüberliegenden Schmalseite 6 ist symmetrisch zur Längsmittellinie der Platte ein halbkreisförmiger Ausschnitt 9 ausgebildet. Die Platte 1 ist mit dem Ausschnitt 9 an den Stamm 4 z.B. einer Weinrebe angelegt, nachdem vorher eine gleiche Platte 1 mit ihrer gelaschten Schmalseite 5 (nicht sichtbar) an den Stamm 4 gelegt worden ist. Hierbei wurden entsprechend dem Durchmesser des Stamms 4 drei Laschen $3^a$ hochgebogen, wie dies aus Figur 2 erkennbar ist. Durch die Laschenausbildung an der linken, nur zum Teil dargestellten Platte 1 und den halbkreisförmigen Ausschnitt 9 der rechten Platte ergibt sich ein enger Umgriff des Stamms 4, so daß auch in unmittelbarer Umgebung des Stamms kein Unkraut wachsen kann. Die Platte 1 hat zwei Kreuzschnitte 10, die gewünschtenfalls zur Befestigung der Platte an dem Erdboden mittels Erdnägeln dienen können. Die beiden Platten sind auf beiden Seiten durch je eine Heftklammer 8 miteinander verbunden, so daß sich nach der Verlegung ein langes zusammenhängendes Plattenband ergibt. Figur 7 zeigt die gleiche Platte, bei der an dem runden Ausschnitt 9 ein Verankerungsband 11 angebracht ist, dessen freies Ende nach dem Anlegen des Stammes 4 an den runden Ausschnitt 9 z.B. mittels Druckknopf oder dergl. an der Platte befestigt wird, so daß sich eine zusätzliche Festlegung ergibt.

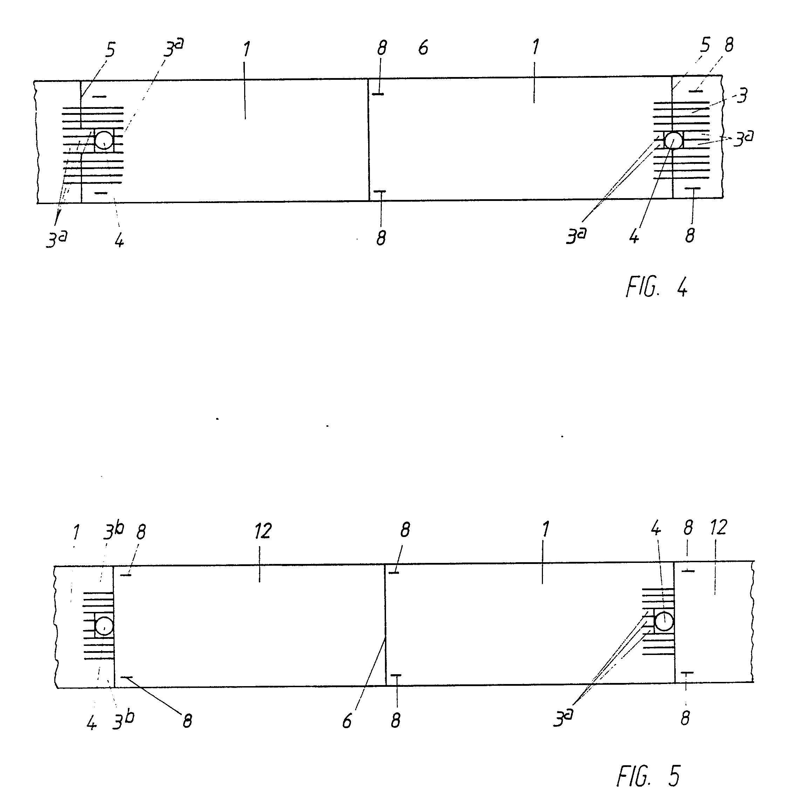

Die in den Figuren 1 bis 7 gezeigte Platte hat eine Länge, die etwas größer als der Abstand zweier benachbarter Stämme 4 ist. Wenn der Stammabstand jedoch zu groß ist, wird die Handhabung der Platte 1 durch deren Länge erschwert. Besteht die Platte aus Pappe, kann sie dann bei unvorsichtiger Handhabung brechen. In diesem Falle wird man zwischen zwei benachbarten Stämmen 4 zwei (ggfs. drei oder mehr) Platten verlegen. Figur 4 zeigt die Ausführungsform eines Plattenbandes, bei dem zwischen zwei Stämmen 4 zwei gleiche Platten 1 verlegt sind. Hierbei überlappen sich die Platten 1 an ihren angelaschten Schmalseiten 6 etwa in der Mitte zwischen den Stämmen 4. Die Platten 1 sind im Bereich dieser Überlappung mittels Heftklammern 8 zusammengeheftet. Die mit Einschnitten 2 versehenen Schmalseiten ragen über die Stämme 4 hinaus, wobei die mittleren Laschen 3ᵃ hochgebogen sind, wie dies in Figur 2 dargestellt ist. Auch die hier mit ihren gelaschten Schmalseiten 5 anschließenden Platten 1 umgeben die Stämme 4 mit ihren Laschen, wobei wiederum die auf den Stamm treffenden Laschen 3ᵃ hochgebogen sind. Der Vorteil dieser Ausführungsform besteht darin, daß man auch bei größeren Stammabständen mit nur einer Plattenart auskommt. Bei dieser Art der Verlegung ist eine leichte Anpassung an unterschiedliche Abstände der Stämme 4 möglich, indem man die Überlappung der Platten in der Mitte, d.h. an den Schmalseiten 6 und. oder die Überlappung der Platten an den Stämmen, d.h. an den Schmalseiten 5, entsprechend ändert.

Das in Figur 5 gezeigte Plattenband unterscheidet sich von dem in Figur 4 dadurch, daß außer der erfindungsgemäß ausgebildeten Platte 1 eine einfache, rechteckige, nicht erfindungsgemäß ausgebildete Verlängerungsplatte 12 eingesetzt wurde. Die Platte 12 wird an dem Stamm 4 auf eine verlegte Platte 1 aufgelegt und durch Heftung 8 mit den Randlaschen 3ᵇ der Platte 1 verbunden. Dann wird die erfindungsgemäß ausgebildete Platte mit ihrer nicht eingeschnittenen Schmalseite 6 auf die Verlängerungsplatte 12 aufgelegt und durch Heftung mit dieser verbunden. Anschließend wird der gelaschte Bereich gegen den nächsten Stamm 4 geschoben, wobei die mittleren Laschen 3ᵃ wiederum hochgebogen werden. Dann wird die nächste Verlängerungsplatte 12 gegen den Stamm 4 geschoben. Auch bei diesem Plattenband ergibt sich eine optimale Abdeckung des Bodens in der Umgebung der Stämme 4.

Bei der in Figur 6 dargestellten Ausführungsform der Erfindung sind die parallelen Einschnitte 2 an einer Schmalseite 5 durch einen halbkreisförmigen Ausschnitt 9 ersetzt. Im übrigen erfolgt die Verlegung und Anordnung wie bei dem in Figur 4 dargestellten Plattenband. Diese Ausführungsform der Platten ist geeignet, wenn der Abstand der Stämme 4 so groß ist, daß zwei Platten 1 von Stamm zu Stamm zu verlegen sind. Unterschiedliche Stammabstände können durch Variation der Plattenüberlappung an den Schmalseiten 6 kompensiert werden.

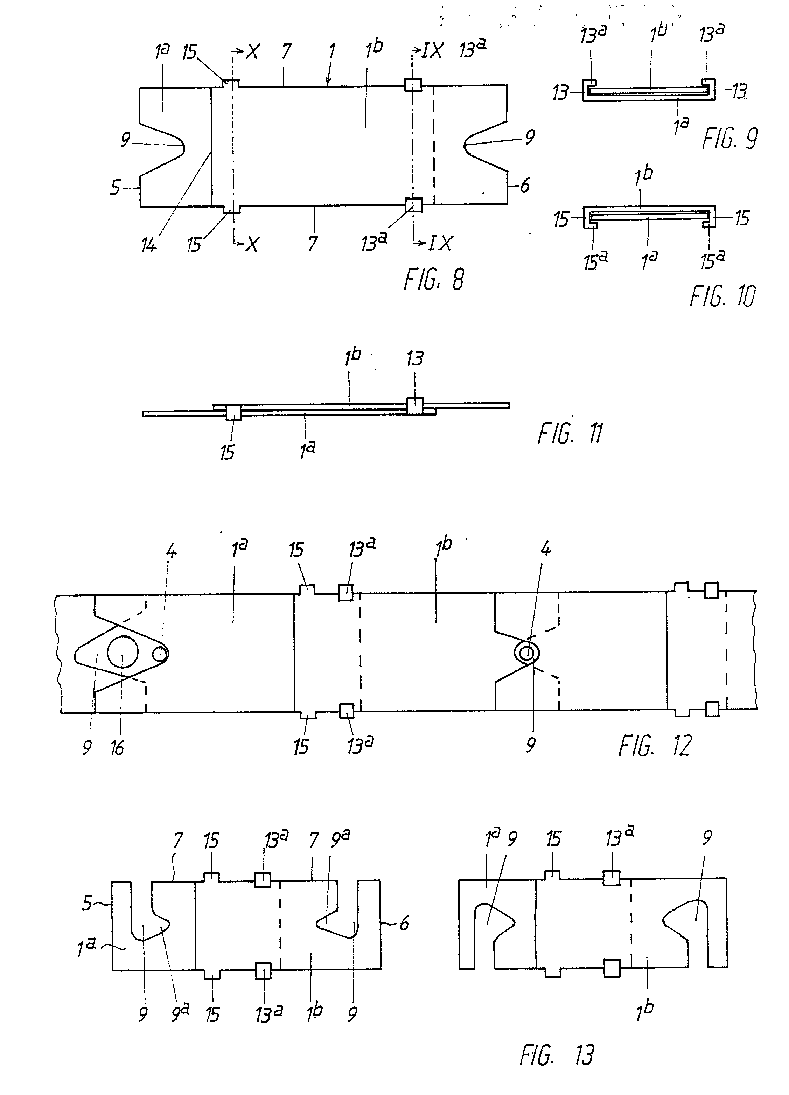

Bei der Ausführungsform nach den Figuren 8 bis 12 besteht die Mulchplatte 1 aus zwei Plattenteilen 1ᵃ und 1ᵇ, die teilweise übereinanderliegen. An der Schmalseite 5 des Plattenteils 1ᵃ befindet sich ein Ausschnitt 9, und an der Schmalseite 6 des Plattenteils 1ᵇ befindet sich ebenfalls ein Ausschnitt 9. Beide Plattenteile 1ᵃ und 1ᵇ sind völlig gleich ausgebildet. An dem Plattenteil 1ᵃ sind an beiden Längsseiten in der Nähe der nicht ausgeschnittenen Schmalseite winklig hochgebogene Führungsansätze 13 mit den Plattenteil 1ᵇ übergreifenden Schenkeln 13ᵃ angeformt. Ebenso sind an den Längsseiten 7 des Plattenteils 1ᵇ in der Nähe der nicht ausgeschnittenen Schmalseite 14 Führungsansätze 15 angeformt, die mit ihren Schenkeln 15ᵃ den Plattenteil 1ᵃ untergreifen. Durch diese übergreifenden Führungsansätze an den Längsseiten 7 der Plattenteile 1ᵃ und 1ᵇ ergibt sich insgesamt eine Platte 1, die sich zwar in ihrer Länge durch Übereinanderschieben der Plattenteile 1ᵃ und 1ᵇ verändern läßt, im übrigen aber eine konstante Breite hat und sich bei der Verlegung gut handhaben läßt.

Figur 12 zeigt ein Teil eines verlegten Plattenbandes aus Platten der Ausführungsform nach Figur 8-11. Die Plattenteile 1ᵃ und 1ᵇ sind im Vergleich zu der Darstellung in Figur 8 auseinandergezogen worden, um die Platte dem Abstand der Gehölzstämme 4 anzupassen. Die Ausschnitte 9 sind links im Band weniger stark zusammengeschoben, so daß eine größere Öffnung verbleibt, in der auch Platz für einen Stützpfahl 16 ist.

Figur 13 zeigt zwei zusammengehörige Platten einer weiteren Ausführungsform der erfindungsgemäßen Mulchplatte. Diese Ausführungsform unterscheidet sich von der nach den Figuren 8 bis 11 im wesentlichen dadurch, daß der Ausschnitt 9 nicht an den Schmalseiten 5 und 6 der Plattenteile 1ᵃ bzw. 1ᵇ ausgebildet ist, sondern an einer Längsseite 7, und zwar auf der gleichen Längsseite der Plattenteile 1ᵃ und 1ᵇ. Die Ausschnitte verlaufen von der Längsseite 7 senkrecht zu dieser etwa bis über die Mittellinie der Platte. Beide Ausschnitte 9 der Plattenteile 1ᵃ und 1ᵇ sind mit V-förmigen Ausschnittteilen 9ᵃ versehen. Diese Platte wird nicht mit der Schmalseite frontal gegen einen Stamm 4 geschoben, sondern mit der Längsseite an der Stelle des Ausschnitts 9. Dabei wird die eine Platte 1 von der einen Seite und die andere Platte 1 von der anderen Seite um den Stamm geschoben. Befindet sich so dann der Stamm in den Ausschnitten 9 der beiden Platten, werden die Platten soweit genähert, bis sich der Stamm 4 in den V-förmigen Bereichen 9ᵃ dieser Ausschnitte befindet und der Stamm 4 somit von beiden Platten eng umschlossen ist.

## Ansprüche

1. Mulchplatte für Reihenpflanzungen zur Unterdrückung des Unkrautwachstums in der Umgebung von Weinreben oder jungen Bäumen in Weingärten bzw. Baumschulen oder Obstplantagen, aus einem biegsamen, lichtundurchlässigen Material, dadurch gekennzeichnet, daß die Platte (1) eine längliche Form hat und an den Schmalseiten (5,6) oder Längsseiten (7) der Platte (1) mehrere Einschnitte (2) oder wenigstens ein Ausschnitt (9) ausgebildet ist.

2. Mulchplatte nach Anspruch 1, dadurch gekennzeichnet, daß die Platte (1) im wesentlichen rechteckig ist.

3. Mulchplatte nach Anspruch 1 oder 2, dadurch gekennzeichnet, daß sie aus wenigstens zwei teilweise übereinanderliegenden Plattenteilen (1ª,1ᵇ) gleicher Breite besteht und an den Längsseiten (7) jedes Plattenteils (1ª,1ᵇ) ein Führungsansatz (13 bzw. 15) für den darüber bzw. darunter liegenden Plattenteil (1ᵇ bzw. 1ª) angeordnet ist.

4. Mulchplatte nach Anspruch 3, dadurch gekennzeichnet, daß die Führungsansätze (13,15) eines Plattenteils (1ª bzw. 1ᵇ) mit den darüber bzw. darunter liegenden anderen Plattenteil (1ᵇ bzw. 1ª) übergreifenden Schenkeln (13ª bzw. 15ª) versehen sind.

5. Mulchplatte nach einem der Ansprüche 1 bis 4, dadurch gekennzeichnet, daß die Ausschnitte (9) an den Schmalseiten (5,6) etwa V- oder U-förmig ausgebildet sind.

6. Mulchplatte nach Anspruch 3 oder 4, dadurch gekennzeichnet, daß sich die Ausschnitte (9) an den Längsseiten (7) bis über die halbe Breite der Plattenteile (1ª,1ᵇ) erstrecken.

7. Mulchplatte nach Anspruch 6, dadurch gekennzeichnet, daß die Ausschnitte (9,9ª) etwa L-förmig ausgebildet sind.

8. Mulchplatte nach einem der Ansprüche 3 bis 7, dadurch gekennzeichnet, daß sie aus Kunststoff besteht.

9. Mulchplatte nach Anspruch 1 oder 2, dadurch gekennzeichnet, daß die Einschnitte (2) zueinander und zum Längsrand (7) der Platte (1) parallel sind.

10. Mulchplatte nach einem der Ansprüche 1 oder 2, dadurch gekennzeichnet, daß die Einschnitte (2) an einer Schmalseite (5) ausgebildet sind und die gegenüberliegende andere Schmalseite (6) der Platte (1) einen vorzugsweise runden oder ovalen Ausschnitt (9) hat.

11. Mulchplatte nach einem der Ansprüche 1 oder 2, dadurch gekennzeichnet, daß an der der eingeschnittenen Schmalseite (5) gegenüberliegenden anderen Schmalseite (6) ein Verankerungsband (11) angebracht ist.

12. Mulchplatte nach einem der Ansprüche 1 oder 2, dadurch gekennzeichnet, daß die durch die Einschnitte (2) gebildeten Laschen (3) wenigstens im mittleren Bereich der Schmalseite (5) abgetrennt sind.

13. Mulchplatte nach einem der Ansprüche 9 bis 12, dadurch gekennzeichnet, daß sie aus einem verrottbaren Material besteht.

14. Mulchplatte nach einem der Ansprüche 1 bis 13, dadurch gekennzeichnet, daß in der Platte (1) wenigstens eine Durchbrechung (10), vorzugsweise ein Kreuzschnitt für die Plattenbefestigung an der Erde ausgebildet ist.

15. Mulchplatte nach einem der Ansprüche 1 bis 14, dadurch gekennzeichnet, daß sie eine Breite in dem Bereich von 20 bis 100 cm, eine Länge in dem Bereich von 50 bis 250 cm und eine Dicke in dem Bereich von 0,1 bis 10 mm, vorzugsweise von 2 bis 3 mm hat.

16. Mulchplatte nach einem der Ansprüche 1 bis 15, dadurch gekennzeichnet, daß sie von den Längsseiten (7) zur Mitte hin ansteigend ausgebildet ist.

17. Verfahren zum Verlegen eines Bandes aus Mulchplatten nach einem der Ansprüche 3 bis 8 unter einer Reben- oder Baumreihe, dadurch gekennzeichnet, daß man

a) die mit einem Ausschnitt (9) versehene Schmal- oder Längsseite (5 bzw. 7) des einen Plattenteils (1ª) einer ersten Platte (1) an den ersten Stamm (4) der Reben- bzw. Baumreihe so anlegt, daß sich der erste Stamm (4) in dem Ausschnitt befindet,

b) die mit einem Ausschnitt (9) versehene Schmal- oder Längsseite (6 bzw. 7) des anderen Plattenteils (1ᵇ) dieser Platte, ggfs. unter gegenseitiger Verschiebung der Plattenteile (1ª,1ᵇ) an den zweiten Stamm (4) der Reben- bzw. Baumreihe so anlegt, daß sich der zweite Stamm (4) in dem Ausschnitt (9) befindet, und

c) eine 2., 3.,....n. Platte zwischen dem 2. und 3. Stamm, 3. und 4. Stamm usw. der Reihe in gleicher Weise wie unter a) und b) angegeben verlegt.

18. Verfahren zum Verlegen eines Bandes aus Mulchplatten nach einem der Ansprüche 9 bis 13 unter einer Reben- oder Baumreihe, dadurch gekennzeichnet, daß man

a) die den Einschnitten (2) gegenüberliegende, mit einem Ausschnitt (9) versehene Schmalseite (6) einer ersten Platte (1) auf dem Boden an den ersten Stamm (4) der Reben- bzw. Baumreihe anlegt und die mit den Einschnitten (2) versehene Schmalseite (5) der Platte (1) mit Abstand vom Boden an den zweiten Stamm in der Reihe anlehnt,

b) die mit den Einschnitten (2) versehene Schmalseite (5) der Platte auf den Erdboden absenkt und dabei eine oder mehrere der durch die Einschnitte (2) gebildeten Laschen (3ª) bei ihrer Anlage an dem zweiten Stamm (4) hochbiegt, und

c) eine 2., 3.,....n. gleiche Platte (1) an den 2., 3.,.n. Stamm (4) anlegt und jede dieser Platten wie unter a) und b) angegeben verlegt.

19. Verfahren nach Anspruch 17 oder 18, dadurch gekennzeichnet, daß man die sich überlappenden Plattenteile (1ª,1ᵇ) zweier Platten bzw. die sich überlappenden einteiligen Platten (1) verbindet, vorzugsweise durch Heften.

FIG. 1

FIG. 2

FIG. 3

FIG. 4

FIG. 5

FIG. 6

FIG. 7

EP 0 345 743 A1

FIG. 8

FIG. 9

FIG. 10

FIG. 11

FIG. 12

FIG. 13

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| X | GB-A-2098444 (WILLIAMS) <br> * das ganze Dokument * <br> --- | 1, 2, 8, 13 | A01G13/02 |
| X | DE-C-926819 (JÖRG) <br> * Seite 2, Zeile 7 - Seite 3, Zeile 36; Figuren 1-7 * | 1-3, 5, 6, 16 | |
| Y | --- | 17 | |
| X | US-A-1910289 (HOAG) <br> * das ganze Dokument * | 1 | |
| Y | --- | 17 | |
| X | GB-A-280419 (PRESSPAN- UND ISOLATIONSMATERIALIEN-WERKE FUR ELEKTROTECHNIK) <br> * Seite 2, Zeilen 25 - 74; Figuren 1-2 * <br> --- | 1, 2 | |
| X | FR-A-1465465 (GRUBER) <br> * das ganze Dokument * <br> --- | 1, 2, 8, 14 | |
| P,X | DE-U-8801414 (PFAFF) <br> * Seite 4, Absatz 1 - Seite 6, Absatz 3; Figuren 1-3 * | 1, 2, 5, 17 | |
| | | | RECHERCHIERTE SACHGEBIETE (Int. Cl.4 ) |
| A | | 7 | |
| | ----- | | A01G |

Der vorliegende Recherchenbericht wurde für alle Patentansprüche erstellt

| Recherchenort | Abschlußdatum der Recherche | Prüfer |
|---|---|---|
| DEN HAAG | 21 SEPTEMBER 1989 | HERYGERS J.J. |

EPO FORM 1503 03.82 (P0403)